# EUROPEAN PATENT APPLICATION

(11) **EP 4 626 094 A1**
(43) Date of publication of application: **01.10.2025**
(21) Application number: 23905638.5
(22) Date of filing: 28.11.2023
(51) Int. Cl.: H04W 56/00

(54) **CLOCK SYNCHRONIZATION METHOD AND DEVICE, CHIP, CHIP MODULE, SYSTEM, AND STORAGE MEDIUM**

(30) Priority: 22.12.2022 CN 202211653738
(71) Applicant: Huawei Technologies Co., Ltd., Shenzhen, Guangdong 518129 (CN)
(72) Inventor: GAO, Lin, Shenzhen, Guangdong 518129 (CN); LIU, Ming, Shenzhen, Guangdong 518129 (CN); FAN, Donglei, Shenzhen, Guangdong 518129 (CN)
(74) Representative: Epping - Hermann - Fischer
(86) International application number: PCT/CN2023/134579
(87) International publication number: WO 2024/131470

(57) **Abstract**

This application discloses a clock synchronization method, an apparatus, a chip, a chip module, a system, and a storage medium. The method includes: obtaining first timestamp information, including a first count value of a first-type clock of a first node and a second count value of a second-type clock of the first node; receiving second timestamp information, including a third count value of a first-type clock of a second node and a fourth count value of a second-type clock of the second node, where the third count value has an association relationship with the first count value; and performing synchronization of the second-type clock of the first node based on the first timestamp information and the second timestamp information. On the basis that the first-type clock of the first node has an association relationship with the first-type clock of the second node, the first node may implement accurate synchronization of the second-type clock of the first node based on the first timestamp information and the second timestamp information.

## Description

This application claims priority to Chinese Patent Application No. 202211653738.9, filed with the China National Intellectual Property Administration on December 22, 2022, and entitled "CLOCK SYNCHRONIZATION METHOD, APPARATUS, CHIP, CHIP MODULE, SYSTEM, AND STORAGE MEDIUM", which is incorporated herein by reference in its entirety.

### TECHNICAL FIELD

This application relates to the field of communication technologies, and in particular, to a clock synchronization method, an apparatus, a chip, a chip module, a system, and a storage medium.

### BACKGROUND

In various application scenarios in which synchronization is required, precisely synchronized clocks are required for network nodes. This type of clock varies with applications, and is referred to as an application clock. In addition, there is usually synchronization between clocks at a link layer in a communication system. This type of clock is generally used for data communication and does not change with the application clock. This type of clock is referred to as a link clock. Usually, high-precision synchronization between link clocks may be easily implemented by sending a synchronization signal at a physical layer and using technologies such as time-of-flight compensation. In addition, the link clock is usually related to data communication and cannot be adjusted randomly. Because application instructions or data needs to be transferred between devices associated with an application, the transfer of the application instructions or data is based on application clock synchronization. However, link clock synchronization and application clock synchronization are usually two separate processes. Currently, there is no related solution for accurately implementing application clock synchronization.

### SUMMARY

This application provides a clock synchronization method, an apparatus, a chip, a chip module, a system, and a storage medium, to accurately implement synchronization of a second-type clock.

According to a first aspect, a clock synchronization method is provided. The method includes: A first node obtains first timestamp information, where the first timestamp information includes a first count value of a first-type clock of the first node and a second count value of a second-type clock of the first node, and the second count value is obtained by the second-type clock of the first node at a moment corresponding to the first count value. The first node receives broadcast signaling, where the broadcast signaling includes second timestamp information, the second timestamp information includes a third count value of a first-type clock of a second node and a fourth count value of a second-type clock of the second node, the fourth count value is obtained by the second-type clock of the second node at a moment corresponding to the third count value, and the third count value has an association relationship with the first count value. The first node performs synchronization of the second-type clock of the first node based on the first timestamp information and the second timestamp information.

In this aspect, on the basis that the first-type clock of the first node has an association relationship with the first-type clock of the second node, the first node may implement accurate synchronization of the second-type clock of the first node based on the first timestamp information and the second timestamp information. In this application, link synchronization and application synchronization are integrated, so that application clock transfer is implemented, and application clock synchronization with high precision and low overheads is implemented.

In a possible implementation, that the third count value has an association relationship with the first count value includes: The third count value is equal to the first count value; or a difference between the third count value and the first count value is less than or equal to a first threshold.

In this implementation, the third count value may be equal to the first count value, or there may be a small offset between the third count value and the first count value. In the foregoing cases, it may be considered that the first-type clock of the first node and the first-type clock of the second node are synchronous.

In another possible implementation, before that a first node obtains first timestamp information, the method further includes: The first node performs synchronization of the first-type clock with the second node.

In this implementation, on the basis that the first-type clock of the first node and the first-type clock of the second node are synchronous, the first node may implement accurate synchronization of the second-type clock of the first node based on the first timestamp information and the second timestamp information.

In still another possible implementation, when the first node determines, based on the first timestamp information and the second timestamp information, that a count offset exists between the second-type clock of the first node and the second-type clock of the second node, the first timestamp information and the second timestamp information are used by the first node to adjust the count offset of the second-type clock of the first node; and/or when the first node determines, based on the first timestamp information and the second timestamp information, that a frequency offset exists between the second-type clock of the first node and the second-type clock of the second node, the first timestamp information and the second timestamp information are used by the first node to adjust the frequency offset of the second-type clock of the first node.

In this implementation, when a count/frequency offset exists between the second-type clock of the first node and the second-type clock of the second node, accurate count/frequency synchronization of the second-type clock of the first node may be implemented based on the first timestamp information and the second timestamp information.

In still another possible implementation, the broadcast signaling further includes a sequence number corresponding to the broadcast signaling.

In this implementation, the broadcast signaling includes a sequence number, so that after receiving the broadcast signaling, the first node may detect, based on the sequence number, whether the broadcast signaling is lost, and may perform accurate clock synchronization based on the second timestamp information in the broadcast signaling and the first timestamp information obtained by the first node.

In still another possible implementation, the second-type clock of the first node is independent of the first-type clock of the first node; or the second-type clock of the first node is generated based on the first-type clock of the first node.

In this implementation, the second-type clock of the first node may be an external independent clock, and does not need to be synchronized to the first-type clock of the first node. Alternatively, the second-type clock of the first node may not be an external independent clock, but is generated by the first-type clock of the first node, or is generated by frequency division/frequency multiplication. Therefore, the second-type clock of the first node has a synchronization relationship with the first-type clock of the first node.

In still another possible implementation, the second node is a protocol master node and a synchronization master node, and that the first node receives broadcast signaling includes: The first node receives broadcast signaling from the second node.

In this implementation, a synchronization master node is a service generator or initiator in the clock synchronization system, and a synchronization slave node is a service processor or executor in the clock synchronization system. The clock synchronization system is also a network system. A protocol master node is a control party of network communication in the network system, and a protocol slave node is a controlled party of network communication in the network system. When the second node is a protocol master node and a synchronization master node, the second node may send broadcast signaling to the first node.

In still another possible implementation, the second node is a synchronization master node, and that the first node receives broadcast signaling includes: The first node receives broadcast signaling from a third node, where the third node is a protocol master node of the second node and the first node.

In this implementation, a synchronization master node is a service generator or initiator in the clock synchronization system, and a synchronization slave node is a service processor or executor in the clock synchronization system. The clock synchronization system is also a network system. A protocol master node is a control party of network communication in the network system, and a protocol slave node is a controlled party of network communication in the network system. When the second node is a synchronization master node but not a protocol master node, broadcast signaling of the second node needs to be forwarded through the third node (namely, the protocol master node).

In still another possible implementation, the method further includes: The first node receives a plurality of pieces of broadcast signaling; and the first node performs synchronization of the second-type clock of the first node based on a plurality of pieces of first timestamp information and the second timestamp information carried in each of the plurality of pieces of broadcast signaling.

In this implementation, the second node may send a plurality of pieces of broadcast signaling periodically or based on event triggering. The first node may perform synchronization of the second-type clock of the first node in each periodicity, or may accumulate a plurality of periodicities, and perform synchronization of the second-type clock of the first node based on a plurality of pieces of second timestamp information carried in the plurality of pieces of broadcast signaling.

When synchronization of the second-type clock of the first node is performed based on the plurality of pieces of second timestamp information carried in the plurality of pieces of broadcast signaling, synchronization may be performed by using several pieces of latest second timestamp information. In addition, different weights may be further assigned to second timestamp information received at different time.

According to a second aspect, a clock synchronization method is provided. The method includes: A second node obtains second timestamp information, where the second timestamp information includes a third count value of a first-type clock of the second node and a fourth count value of a second-type clock of the second node, and the fourth count value is obtained by the second-type clock of the second node at a moment corresponding to the third count value. The second node sends broadcast signaling, where the broadcast signaling includes the second timestamp information, to enable a first node to perform synchronization of a second-type clock of the first node based on first timestamp information and the second timestamp information after the first node receives the broadcast signaling, where the first timestamp information includes a first count value of a first-type clock of the first node and a second count value of the second-type clock of the first node, the second count value is obtained by the second-type clock of the first node at a moment corresponding to the first count value, and the third count value has an association relationship with the first count value.

In this aspect, on the basis that the first-type clock of the first node has an association relationship with the first-type clock of the second node, the first node may implement accurate synchronization of the second-type clock of the first node based on the first timestamp information and the second timestamp information.

In a possible implementation, that the third count value has an association relationship with the first count value includes: The third count value is equal to the first count value; or a difference between the third count value and the first count value is less than or equal to a first threshold.

In another possible implementation, before that a second node obtains second timestamp information, the method further includes: The second node performs synchronization of the first-type clock to the first node.

In still another possible implementation, the broadcast signaling further includes a sequence number corresponding to the broadcast signaling.

In still another possible implementation, the second-type clock of the second node is independent of the first-type clock of the second node; or the second-type clock of the second node is generated based on the first-type clock of the second node.

In still another possible implementation, the second node is a synchronization master node, and that the second node sends broadcast signaling includes: The second node forwards the broadcast signaling through a third node, where the third node is a protocol master node of the second node and the first node.

According to a third aspect, a clock synchronization apparatus is provided, and may implement the method in the first aspect. The foregoing method may be implemented by software, hardware, or hardware executing corresponding software.

In a possible implementation, the apparatus includes: an obtaining unit, configured to obtain first timestamp information, where the first timestamp information includes a first count value of a first-type clock of the apparatus and a second count value of a second-type clock of the apparatus, and the second count value is obtained by the second-type clock of the apparatus at a moment corresponding to the first count value; a receiving unit, configured to receive broadcast signaling, where the broadcast signaling includes second timestamp information, the second timestamp information includes a third count value of a first-type clock of a second node and a fourth count value of a second-type clock of the second node, the fourth count value is obtained by the second-type clock of the second node at a moment corresponding to the third count value, and the third count value has an association relationship with the first count value; and a first synchronization unit, configured to performs synchronization of the second-type clock of the apparatus based on the first timestamp information and the second timestamp information.

Optionally, that the third count value has an association relationship with the first LSC count value includes: The third count value is equal to the first count value; or a difference between the third count value and the first count value is less than or equal to a first threshold.

Optionally, the apparatus further includes: a second synchronization unit, configured to perform, by the apparatus, synchronization of the first-type clock with the second node.

Optionally, when the apparatus determines, based on the first timestamp information and the second timestamp information, that a count offset exists between the second-type clock of the apparatus and the second-type clock of the second node, the first timestamp information and the second timestamp information are used by the apparatus to adjust the count offset of the second-type clock of the apparatus; and/or when the apparatus determines, based on the first timestamp information and the second timestamp information, that a frequency offset exists between the second-type clock of the apparatus and the second-type clock of the second node, the first timestamp information and the second timestamp information are used by the apparatus to adjust the frequency offset of the second-type clock of the apparatus.

Optionally, the broadcast signaling further includes a sequence number corresponding to the broadcast signaling.

Optionally, the second-type clock of the apparatus is independent of the first-type clock of the apparatus; or the second-type clock of the apparatus is generated based on the first-type clock of the apparatus.

Optionally, the second node is a protocol master node and a synchronization master node, and the receiving unit is configured to receive broadcast signaling from the second node.

Optionally, the second node is a synchronization master node, and the receiving unit is configured to receive broadcast signaling from a third node, where the third node is a protocol master node of the second node and the apparatus.

Optionally, the receiving unit is further configured to receive a plurality of pieces of broadcast signaling; and the first synchronization unit is further configured to perform synchronization of the second-type clock of the apparatus based on a plurality of pieces of first timestamp information and the second timestamp information carried in each of the plurality of pieces of broadcast signaling.

According to a fourth aspect, a clock synchronization apparatus is provided, and may implement the method in the second aspect. The foregoing method may be implemented by software, hardware, or hardware executing corresponding software.

In a possible implementation, the apparatus includes: an obtaining unit, configured to obtain second timestamp information, where the second timestamp information includes a third count value of a first-type clock of the apparatus and a fourth count value of a second-type clock of the apparatus, and the fourth count value is obtained by the second-type clock of the apparatus at a moment corresponding to the third count value; and a sending unit, configured to send broadcast signaling, where the broadcast signaling includes the second timestamp information, to enable a first node to perform synchronization of a second-type clock of the first node based on first timestamp information and the second timestamp information after the first node receives the broadcast signaling, where the first timestamp information includes a first count value of a first-type clock of the first node and a second count value of the second-type clock of the first node, the second count value is obtained by the second-type clock of the first node at a moment corresponding to the first count value, and the third count value has an association relationship with the first count value.

Optionally, that the third count value has an association relationship with the first LSC count value includes: The third count value is equal to the first count value; or a difference between the third count value and the first count value is less than or equal to a first threshold.

Optionally, the apparatus further includes: a synchronization unit, configured to perform, by the apparatus, synchronization of the first-type clock to the first node.

Optionally, the broadcast signaling further includes a sequence number corresponding to the broadcast signaling.

Optionally, the second-type clock of the apparatus is independent of the first-type clock of the apparatus; or the second-type clock of the apparatus is generated based on the first-type clock of the apparatus.

Optionally, the apparatus is a synchronization master node, and the sending unit is configured to forward the broadcast signaling through a third node, where the third node is a protocol master node of the apparatus and the first node.

In another possible implementation, the apparatus in the third aspect or the fourth aspect includes a processor coupled to a memory. The processor is configured to support the apparatus in performing a corresponding function in the foregoing method. The memory is configured to couple to the processor, and stores a program (instructions) and/or data necessary for the apparatus. Optionally, the apparatus may further include an interface configured to support interaction between the apparatus and another apparatus. Optionally, the memory may be located inside the apparatus, or may be located outside the apparatus. Optionally, the memory may be integrated with the processor.

In still another possible implementation, the apparatus in the third aspect or the fourth aspect includes a processor and an interface circuit. The processor is coupled to the interface circuit. The processor is configured to execute a computer program or instructions, to control the interface circuit to receive and send information. When the processor executes the computer program or the instructions, the processor is further configured to implement the foregoing method by using a logic circuit or executing code instructions. The interface circuit may be a transceiver, a transceiver circuit, or an input/output interface, and is configured to: receive a signal from an apparatus other than the apparatus and transmit the signal to the processor, or transmit a signal from the processor to an apparatus other than the apparatus. When the apparatus is a chip, the interface circuit is a transceiver circuit or an input/output interface.

When the apparatus in the third aspect or the fourth aspect is a chip or a chip module, the sending unit may be an output unit, for example, an output circuit or interface, and the receiving unit may be an input unit, for example, an input circuit or interface.

According to a fifth aspect, a computer-readable storage medium is provided. The computer-readable storage medium stores a computer program or instructions, and when a computer executes the computer program or the instructions, the method according to any one of the first aspect, the second aspect, or the implementations of the first aspect or the second aspect is implemented.

According to a sixth aspect, a computer program product including instructions is provided. When the instructions are run on an apparatus, the apparatus is enabled to perform the method according to any one of the first aspect, the second aspect, or the implementations of the first aspect or the second aspect.

According to a seventh aspect, a clock synchronization system is provided, including the clock synchronization apparatus according to the third aspect and the clock synchronization apparatus according to the fourth aspect.

### BRIEF DESCRIPTION OF DRAWINGS

FIG. 1 is a diagram of an example of wireless networking of a master speaker and a slave speaker according to this application;
FIG. 2a is a schematic flowchart of PTP synchronization in a one-step mode according to an embodiment of this application;
FIG. 2b is a schematic flowchart of PTP synchronization in a two-step mode according to an embodiment of this application;
FIG. 3 is a diagram of a structure of a clock synchronization system according to an embodiment of this application;
FIG. 4 is a schematic flowchart of a clock synchronization method according to an embodiment of this application;
FIG. 5a is a diagram of a networking structure of network nodes according to an embodiment of this application;
FIG. 5b is a diagram of another networking structure of network nodes according to an embodiment of this application;
FIG. 6 is a diagram of a structure of a clock synchronization apparatus according to an embodiment of this application;
FIG. 7 is a diagram of a structure of another clock synchronization apparatus according to an embodiment of this application; and
FIG. 8 is a diagram of a structure of still another clock synchronization apparatus according to an embodiment of this application.

### DESCRIPTION OF EMBODIMENTS

The following describes embodiments of this application with reference to the accompanying drawings in embodiments of this application.

In various application scenarios in which synchronization is required, precisely synchronized clocks are required for network nodes. This type of clock varies with applications, and is referred to as an application clock. For example, the application clock is:
an audio play clock of each node in wireless composite stereo;
a timing clock of an ultrasonic transmit end and an ultrasonic receive end in an ultrasonic based wireless ranging system; or
a network-based synchronization control clock among a plurality of executors.

In addition, there is usually synchronization between clocks at a link layer in a communication system. This type of clock is generally used for data communication and does not change with the application clock. This type of clock is referred to as a link clock. For example, the link clock is:
an authorized clock for a global navigation satellite system (global navigation satellite system, GNSS) to implement clock synchronization between a satellite-borne clock and a ground receiver;
a precision time protocol (precision time protocol, PTP) to implement clock synchronization between a PTP master node and a PTP slave node; or
synchronization of a Wi-Fi timing synchronization function (timing synchronization function, TSF) to implement clock synchronization between a Wi-Fi master node and a Wi-Fi slave node.

Usually, high-precision synchronization of link clocks may be easily implemented by sending a synchronization signal at a physical layer and using technologies such as time-of-flight compensation. In addition, the link clock is usually related to data communication and cannot be adjusted randomly.

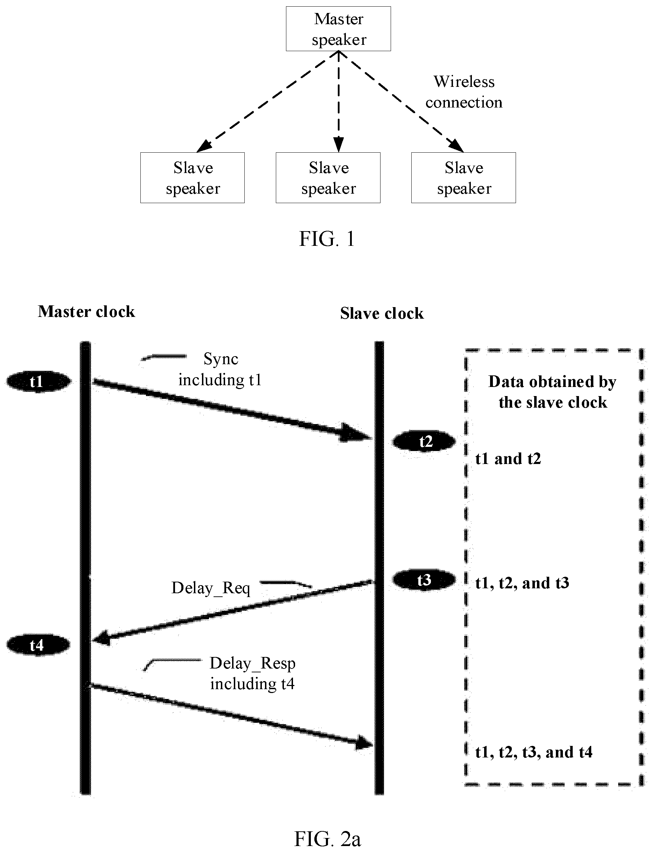

Because application instructions or data needs to be transferred between devices associated with an application, the transfer of the application instructions or data is based on application clock synchronization. For example, development of wireless communication technologies drives audio transmission in a home theater to begin to evolve from wired transmission to wireless transmission. FIG. 1 is a diagram of an example of wireless networking of a master speaker and a slave speaker according to this application. The master speaker and the slave speaker are connected in a wireless manner (for example, connected through Wi-Fi), thereby avoiding wiring. Audio synchronization precision between a plurality of speakers is one of the key indicators, and determines sound image stability and surround sound experience effect. According to statistics of physiological acoustics, ultimate experience requires a synchronization error of less than 20 µs.

However, link clock synchronization and application clock synchronization are usually two separate processes. Currently, there is no related solution for accurately implementing application clock synchronization.

PTP synchronization is a common network time synchronization solution.

FIG. 2a is a schematic flowchart of PTP synchronization in a one-step (one step) mode according to an embodiment of this application. A master clock sends a synchronization (synchronization, Sync) packet to a slave clock at time t1, where the Sync packet includes the time t1 recorded by the master clock. After receiving the Sync packet, the slave clock records time t2 at which the Sync packet is received, and stores the received t1. The slave clock sends a delay request (Delay _Req) to the master clock at time t3, and records the time t3, t1, and t2. The master clock receives the delay request at time t4, and sends a delay response (Delay _Resp) to the slave clock, where the delay response includes the time t4. After receiving the delay response, the slave clock records the time t1, t2, t3, and t4.

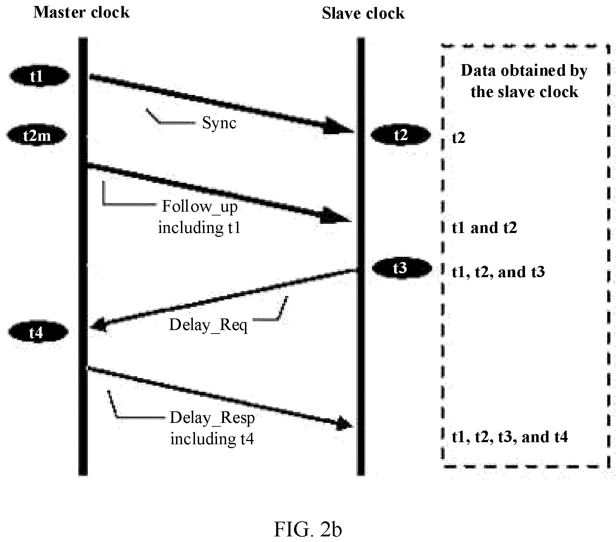

FIG. 2b is a schematic flowchart of PTP synchronization in a two-step (two step) mode according to an embodiment of this application. A master clock sends a Sync packet to a slave clock at time t1. The slave clock receives the Sync packet at time t2. The master clock sends a Follow _up packet to the slave clock at time t2m, where the Follow _up packet includes t1. That is, the master clock does not include t1 in the Sync packet but includes t1 in the separate Follow _up packet. This mode is referred to as the two-step mode. The slave clock sends a delay request to the master clock at time t3, and records the time t3, t1, and t2. The master clock receives the delay request at time t4, and sends a delay response to the slave clock, where the delay response includes the time t4. After receiving the delay response, the slave clock records the time t1, t2, t3, and t4.

According to either the one-step mode or the two-step mode, the following equations may be obtained:
t2-t1 =delay+offset; and
t4-t3=delay-offset.

The delay is a unidirectional transmission delay of a link between the master clock and the slave clock, and the offset is a relative offset between the master clock and the slave clock.

According to the foregoing two equations, the offset and the delay may be obtained through solution.

Then, clock synchronization is implemented by adjusting a count timestamp or a count frequency of the slave node.

This solution has the following assumptions:
1. An interface for timestamping is precise and stable, so a hardware-assisted timestamping mechanism appears.
2. A transmission delay of a link is stable.
3. Uplink and downlink delays of a link are symmetrical and equal.

However, in the foregoing PTP synchronization or similar frame interaction-based solution, it is usually difficult to obtain high synchronization precision in a wireless transmission system. A reason is that a prerequisite for the foregoing PTP synchronization solution is usually not met in wireless transmission:
1. The interface for timestamping is precise and stable. If timestamping is performed by software, a jitter of a timestamp is affected by load of a central processing unit (central processing unit, CPU) and hardware interruption. The hardware-assisted timestamping mechanism can alleviate this problem to some extent.
2. The transmission delay of the link is stable. This is usually unreliable in wireless transmission. For example, access backoff of Wi-Fi causes a millisecond-level or even tens of milliseconds-level jitter of the transmission delay.
3. The uplink and downlink delays of the link are symmetrical and equal. This is also usually unreliable in wireless transmission. For example, a delay of different nodes and different batches of channel access in Wi-Fi also has a millisecond-level or even tens of milliseconds-level jitter.
4. When a quantity of slave nodes increases, a quantity of synchronization packets increases accordingly. In a contention-based access protocol (such as Wi-Fi), this may result in an increase in air interface contention and further deteriorate synchronization precision.

In conclusion, it is usually difficult to reach high precision in application clock synchronization on a wireless link, or an advanced filtering algorithm is needed. This usually requires high computing power or memory overheads.

Therefore, how to implement clock synchronization accurately at low costs is a problem that needs to be resolved in this application.

An embodiment of this application provides a clock synchronization solution. The solution includes: obtaining first timestamp information, including a first count value of a first-type clock of a first node and a second count value of a second-type clock of the first node, where the second count value is obtained by the second-type clock of the first node at a moment corresponding to the first count value; receiving second timestamp information, including a third count value of a first-type clock of a second node and a fourth count value of a second-type clock of the second node, where the fourth count value is obtained by the second-type clock of the second node at a moment corresponding to the third count value, and the third count value has an association relationship with the first count value; and performing synchronization of the second-type clock of the first node based on the first timestamp information and the second timestamp information. On the basis that the first-type clock of the first node has an association relationship with the first-type clock of the second node, the first node may implement accurate synchronization of the second-type clock of the first node based on the first timestamp information and the second timestamp information.

In this application, the first-type clock and the second-type clock are different types of clocks, but specific types of clocks of the first-type clock and the second-type clock are limited. For example, the first-type clock may be a link clock, and the second-type clock may be an application clock; or the first-type clock may be an application clock, and the second-type clock may be a link clock, or the like. The following embodiment is described by using an example in which the first-type clock is a link clock and the second-type clock is an application clock.

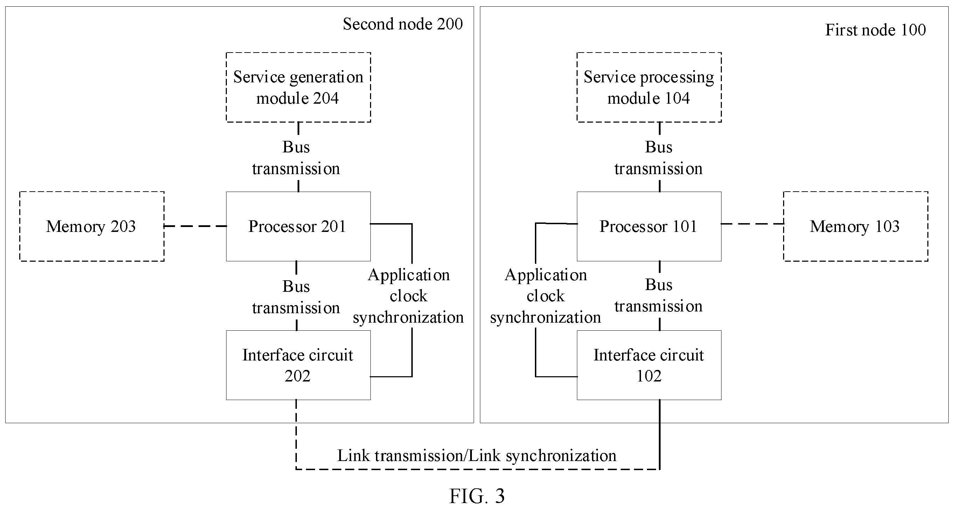

FIG. 3 is a diagram of a structure of a clock synchronization system according to an embodiment of this application. The system may be used for clock synchronization in a network transmission system. The clock synchronization system includes at least two clock synchronization apparatuses. For example, as shown in FIG. 3, the clock synchronization system includes at least one first node 100 (one first node is illustrated in the figure) and one second node 200. The first node 100 includes a processor 101 and an interface circuit 102. The interface circuit 102 is configured to: receive a signal from a node other than the first node 100 and transmit the signal to the processor 101, or send a signal from the processor 101 to a node other than the first node 100. The processor 101 is configured to implement the clock synchronization method in this embodiment by using a logic circuit or executing code instructions. The first node 100 may further include a memory 103 and a service processing module 104 that are represented and connected by dashed lines in the figure. The second node 200 includes a processor 201 and an interface circuit 202. The interface circuit 202 is configured to receive a signal from a node other than the second node 200 and transmit the signal to the processor 201, or send a signal from the processor 201 to a node other than the second node 200. The processor 201 is configured to implement the clock synchronization method in this embodiment by using a logic circuit or executing code instructions. The second node 200 may further include a memory 203 and a service generation module 204 that are represented and connected by dashed lines in the figure.

Main functions of the modules in the figure are as follows:
The service generation module 204 is a service source of the entire system, and is responsible for collecting and encoding a service source. Common service source generation processes include, for example, recording and encoding of a multi-channel audio source, and collection and compression of a video.

The service processing module 104 is a service consumption point of the entire system, and is responsible for decoding, displaying, and the like of a service source. Common service source processing processes include, for example, decoding and playing of an audio stream and decoding and displaying of a video.

The interface circuit 102/202 may be, for example, a wired/wireless transceiver, and is responsible for link synchronization and link transmission between a master node and a slave node, to transfer a service and an application clock to each node.

Functions of the processor 101/201 include: transferring a service between the service generation module 204/service processing module 104 and the interface circuit 102/202 based on bus transmission; implementing synchronization between an application clock and a link clock by using a specific algorithm; and assisting link synchronization between a master node and a slave node.

The memory 103/203 provides necessary storage space for software running on the processor 101/201.

Nodes in the clock synchronization system in this application need to perform link communication. Therefore, the clock synchronization system is also a network system, for example, a wireless/wired network transmission system such as Wi-Fi, SparkLink, or power line communication. Possible product forms of the first node and the second node include a router, an audio transmission device, a video transmission device, and the like.

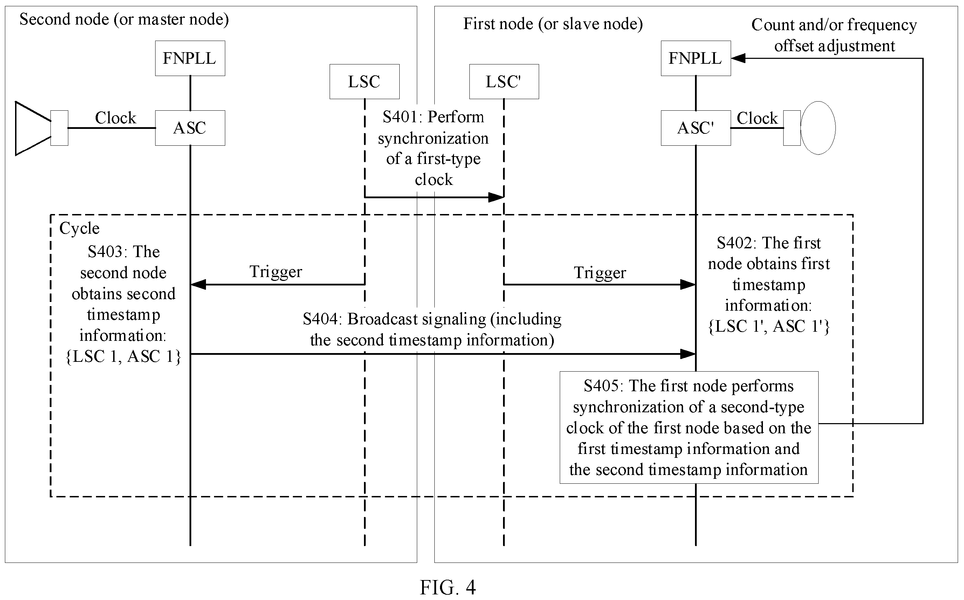

FIG. 4 is a schematic flowchart of a clock synchronization method according to an embodiment of this application. The method may be applied to the foregoing clock synchronization system. For example, the method may include the following steps.

S401: A second node performs synchronization of a first-type clock to a first node.

In this embodiment, the first node may be, for example, a synchronization slave node in the foregoing clock synchronization system, and the second node may be, for example, a synchronization master node in the foregoing clock synchronization system. For example, the second node may be the master speaker shown in FIG. 1, and the first node may be the slave speaker shown in FIG. 1.

The second node may perform synchronization of the first-type clock to one or more first nodes.

In this embodiment, an example in which the first-type clock is a link clock is used for description.

For example, link synchronization between the second node and the first node may be implemented by executing a link synchronization mechanism.

For example, in a Wi-Fi system, TSF counter synchronization between an AP (namely, a master node) and a STA (namely, a slave node) may be implemented based on a TSF function. The TSF is specified in the IEEE 802.11 wireless local area network (wireless local area network, WLAN) standard, and is used to implement timing synchronization between users. The TSF keeps timers of all stations in a same basic service set (basic service set, BSS) synchronized. All stations need to keep local TSF timers. Each mobile host maintains one TSF timer that counts in microsecond increments. Timing synchronization is implemented by stations periodically exchanging timing information by using beacon frames. In the BSS, the AP sends TSF information in a beacon. Each station maintains one TSF timer that counts in microsecond (µs) increments. If received timing is later than that of the TSF timer of the station, the station uses the received timing, to implement network-wide time synchronization.

For another example, in a SparkLink (SparkLink) system, superframe counter synchronization between a master node and a slave node is implemented based on physical layer broadcast. The SparkLink is a short-range wireless communication protocol. A principle of SparkLink is as follows: A SparkLink master node and a SparkLink slave node each include a 16-bit counter, the counter is incremented by 1 every 1 ms, and a count value of the counter is referred to as SparkLink link time. The SparkLink master node periodically broadcasts synchronization signaling, and time for sending the signaling over an air interface is strictly aligned to a boundary of 1 ms. Typically, the synchronization signaling is sent every 4 ms. Each piece of synchronization signaling includes SparkLink link time corresponding to a start moment of sending the signaling. Each slave node periodically receives the synchronization signaling, calculates a time offset and a frequency offset between the local and the master node based on a start event of the signaling, local time, and a time value included in the signaling, adjusts a count value of the counter or a count frequency of counter, and continues to track, to implement synchronization between the master node and the slave node.

For another example, in a hardware-assisted PTP system, PTP counter synchronization between a master node and a slave node is implemented based on PTP frame interaction. For details, refer to the description of the foregoing PTP synchronization solution.

As shown in FIG. 4, a link synchronization counter (link sync counter, LSC) in the second node is configured to count a link clock of the second node, and an LSC' in the first node is configured to count a link clock of the first node. That the second node performs synchronization of the link clock to the first node may be understood as that a count value of the LSC of the second node has an association relationship with a count value of the LSC' of the first node.

S402: The first node obtains first timestamp information.

After the second node performs synchronization of the link clock to the first node, the LSC' of the first node obtains a first count value of the LSC' of the first node, and triggers, at a moment corresponding to the first count value, obtaining of a second count value of an application synchronization counter (application sync counter, ASC') of the first node, to obtain the first timestamp information. The first timestamp information includes the first count value of the LSC' of the first node and the second count value of the ASC' of the first node. The second count value is obtained by the ASC' of the first node at the moment corresponding to the first count value.

Triggering manners of triggering, at the moment corresponding to the first count value, obtaining of the second count value of the ASC' of the first node may be as follows:
In one manner, a count value of the ASC' is read upon expiration based on a software timer.

In another manner, a count value of the ASC' is latched upon expiration based on a hardware timer. For example, an ASC' chip reads an instantaneous value of the ASC' at a rising edge or a falling edge of a trigger signal, and then stores the instantaneous value in a specific register for subsequent reading by software.

The first node stores the obtained first timestamp information.

There may be the following two implementations for a relationship between the ASC' and the LSC' of the first node:
In an implementation, in the first node, an application clock of the first node is independent of the link clock of the first node. For example, the application clock may be an external independent clock and does not need to be synchronized to the link clock. As shown in FIG. 4, the ASC' performs counting on an independent clock.

In another implementation, in the first node, the application clock of the first node is generated based on the link clock of the first node. For example, the application clock is not an external independent clock, but is generated by the link clock of the first node, or is a clock generated by frequency division/frequency multiplication. The application clock has a synchronization relationship with the link clock.

S403: The second node obtains second timestamp information.

After the second node performs synchronization of the link clock to the first node, the LSC of the second node obtains a third count value of the LSC of the second node, and triggers, at a moment corresponding to the third count value, obtaining of a fourth count value of an ASC of the second node. Therefore, the second timestamp information is obtained. The second timestamp information includes the third count value of the LSC of the second node and the fourth count value of the ASC of the second node, and the fourth count value is obtained by the ASC of the second node at the moment corresponding to the third count value.

A triggering manner of triggering, at the moment corresponding to the third count value, obtaining of the fourth count value of the ASC of the second node may be the same as that of triggering, at the moment corresponding to the first count value, obtaining of the second count value of the ASC' of the first node.

The third count value has an association relationship with the first count value. There are the following several cases in which the third count value has an association relationship with the first count value:
In an ideal case, the third count value is equal to the first count value. For example, in the foregoing example, the first node obtains the first timestamp information: {LSC', ASC'}, and the second node obtains the second timestamp information: {LSC, ASC}. In this case, LSC=LSC'.

In another case, a small offset is allowed between the third count value and the first count value. For example, a difference between the third count value and the first count value is less than or equal to a first threshold. For example, if LSC=LSC'+delta, a timestamp corresponding to the moment corresponding to the first count value on a first node side may be calculated in reverse based on {LSC, ASC} as {LSC-delta, ASC-delta}, namely, {LSC', ASC-delta}.

It is clear that the ASC and the LSC are not in a same clock domain and cannot be directly subtracted.

However, if the delta is very small (for example, 1 ms) and a frequency offset between the ASC and the LSC is very small (for example, 20 ppm), a resulting error (for example, 1 ms*20 ppm=20 ns) may be ignored in a specific precision requirement scenario.

Further, a frequency offset of LSC/ASC on the first node side may be estimated, and then precise reverse calculation is performed. A corresponding timestamp pair is {LSC', ASC-delta*k}, where k is a frequency offset of the ASC' on the first node side relative to the LSC', and an estimation manner is k=ΔASC/ΔLSC.

Further, the first node triggers, at the moment corresponding to the first count value, obtaining of the second count value of the ASC' of the first node, and the second node triggers, at the moment corresponding to the third count value, obtaining of the fourth count value of the ASC of the second node. The first count value and the third count value may be agreed upon by the first node and the second node in advance, or may be set before delivery. For example, in an ideal case, the third count value is equal to the first count value. This means that the first node and the second node respectively trigger, at a moment corresponding to a same count value, obtaining of a count value of the ASC' of the first node and a count value of the ASC of the second node.

The second node stores the obtained second timestamp information.

There may be the following two implementations for the relationship between the ASC and the LSC of the second node:
In one implementation, in the second node, the application clock of the second node is independent of the link clock of the second node. For example, the application clock of the second node may be an external independent clock, and does not need to be synchronized to the link clock. As shown in FIG. 4, the ASC performs counting on an independent clock.

In another implementation, in the second node, the application clock of the second node is generated based on the link clock of the second node. For example, the application clock of the second node is not an external independent clock, but is generated by the link clock of the second node, or is a clock generated by frequency division/frequency multiplication. The application clock has a synchronization relationship with the link clock.

S404: The second node sends broadcast signaling to the first node.

Correspondingly, the first node receives the broadcast signaling.

The broadcast signaling includes the second timestamp information: {LSC, ASC}.

For example, the first node may periodically obtain the first timestamp information, and the second node may periodically obtain the second timestamp information. After the first node and the second node perform the foregoing obtaining operation on a trigger point, the second node sends the broadcast signaling to the first node before a next trigger point arrives.

For example, the broadcast signaling may further include a sequence number corresponding to the broadcast signaling. The sequence number is used by the first node to detect whether the broadcast signaling is lost, resulting in inaccurate subsequent synchronization. For example, the second node locally records a sequence number, and the sequence number may start counting from 0 or another value. Each time the second node sends one piece of broadcast signaling, the sequence number is incremented by 1. After receiving the broadcast signaling, the first node parses the broadcast signaling to obtain the sequence number, and locally stores the sequence number. If the sequence number received by the first node is not equal to the sequence number received last time plus 1, it is considered that the broadcast signaling is lost.

In this embodiment, the second node and the first node respectively play the roles of a synchronization master node and a synchronization slave node in the clock synchronization system (that is, the second node is the synchronization master node, and the first node is the synchronization slave node). In addition, nodes in the clock synchronization system need to perform link communication. Therefore, the clock synchronization system is also a network system. Therefore, the second node and the first node further have a relationship between a protocol master node and a protocol slave node in the network system. The synchronization master node is a service generator (for example, a data source) or initiator in the clock synchronization system, and the synchronization slave node is a service processor or executor in the clock synchronization system. The protocol master node is a control party of network communication in the network system, and the protocol slave node is a controlled party of network communication in the network system.

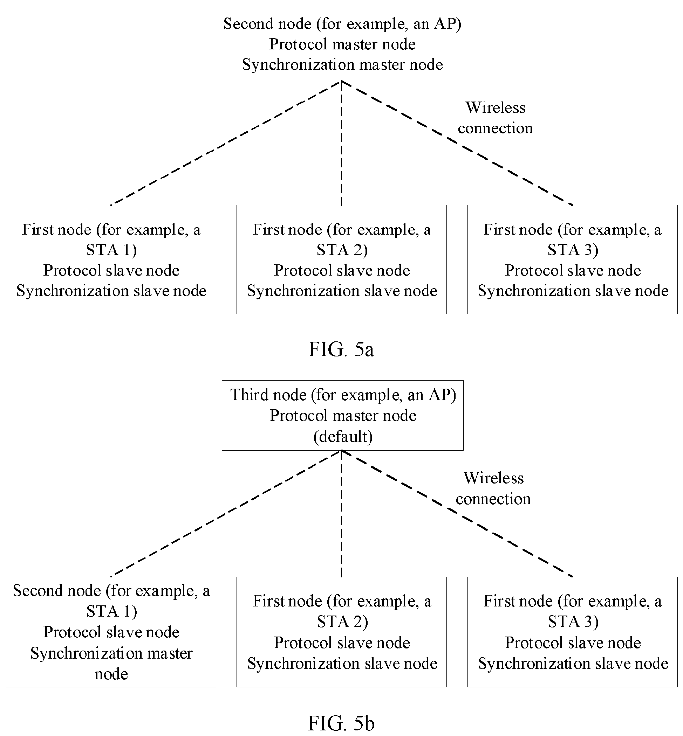

FIG. 5a is a diagram of a networking structure of network nodes according to an embodiment of this application. The second node is both a protocol master node and a synchronization master node, and the first node is both a protocol slave node and a synchronization slave node. For example, in a Wi-Fi system, the second node is an access point (access point, AP), and the first node is a station (station, STA). For another example, in a cellular system, the second node is a base station, and the first node is a terminal. When the second node is a protocol master node and a synchronization master node, the second node may send broadcast signaling to the first node.

FIG. 5b is a diagram of another networking structure of network nodes according to an embodiment of this application. The second node is both a protocol slave node and a synchronization master node, and the first node is both a protocol slave node and a synchronization slave node. For example, in a Wi-Fi system, the synchronization master node is a STA 1, the synchronization slave node is a STA 2 or a STA 3, and a protocol master node is a third node, namely, an AP. In this case, when the second node is the synchronization master node but not the protocol master node, the broadcast signaling of the second node needs to be forwarded through the third node (that is, the protocol master node, namely, the AP). In this case, the AP serves as the protocol master node, and is responsible for only link clock synchronization, and does not participate in application clock synchronization. One STA 1 to which the AP belongs serves as the synchronization master node, and is responsible for sending synchronization broadcast signaling, and the AP forwards the synchronization broadcast signaling to another node in the network.

In another embodiment, for example, in the Ethernet, when the second node is a synchronization master node but not a protocol master node, the second node may alternatively directly send the broadcast signaling.

S405: The first node performs synchronization of the second-type clock of the first node based on the first timestamp information and the second timestamp information.

In specific implementation, when a count and/or frequency offset exists between the second-type clock of the first node and the second-type clock of the second node, accurate count and/or frequency synchronization of the second-type clock of the first node may be implemented based on the first timestamp information and the second timestamp information. For example, when a count and/or frequency offset exists between the application clock of the first node and the application clock of the second node, accurate count and/or frequency synchronization of the application clock of the first node may be implemented based on the first timestamp information and the second timestamp information.

A count offset may exist between the application clock of the first node and the application clock of the second node, but frequencies may be the same; a frequency offset may exist between the application clock of the first node and the application clock of the second node, but counts are the same; or both a count offset and a frequency offset may exist between the application clock of the first node and the application clock of the second node.

When the first node determines, based on the first timestamp information and the second timestamp information, that a count offset exists between the second-type clock of the first node and the second-type clock of the second node, the first timestamp information and the second timestamp information are used by the first node to adjust the count offset of the second-type clock of the first node. That is, the first node may adjust the count offset between the second-type clock of the first node and the second-type clock of the second node based on the first timestamp information and the second timestamp information. For example, the first timestamp information is {LSC', ASC'}, the second timestamp information is {LSC, ASC}, and a count offset between the ASC' and the ASC is a0. For example, if the ASC' is a0 milliseconds less than the ASC, the first node may adjust the local counter ASC', and an adjusted ASC' is equal to the ASC' before adjustment plus a0. In addition, as shown in FIG. 4, the first node may alternatively synchronize with the second node by adjusting a local fractional-N phase-locked loop (fractional-N phase-locked loop, FNPLL).

When the first node determines, based on the first timestamp information and the second timestamp information, that a frequency offset exists between the second-type clock of the first node and the second-type clock of the second node, the first timestamp information and the second timestamp information are used by the first node to adjust the frequency offset of the second-type clock of the first node. That is, the first node may adjust the frequency offset between the second-type clock of the first node and the second-type clock of the second node based on the first timestamp information and the second timestamp information. For example, for three pieces of second timestamp information that are sequentially received: (ASC 1, LSC 1), (ASC 2, LSC 2), (ASC 3, LSC 3), a frequency of the second node is equal to [(ASC 3-ASC 2) - (ASC 2-ASC 1)]/(ASC 3-ASC 2), correspondingly, three pieces of first timestamp information that are recorded by the first node are (ASC 1', LSC 1'), (ASC 2', LSC 2'), (ASC 3', LSC 3'), and a frequency of the first node is equal to [(ASC 3'-ASC 2')-(ASC 2'-ASC1')]/(ASC3'-ASC 2'). Therefore, it may be obtained that the frequency offset between the application clock of the first node and the application clock of the second node is equal to the frequency of the first node minus the frequency of the second node. When both a count offset and a frequency offset exist between the application clock of the first node and the application clock of the second node, adjustment of the local counter ASC' of the first node may implement that a count of the application clock of the first node and a count of the application clock of the second node are the same, but cannot make a frequency of the application clock of the first node and a frequency of the application clock of the second node be the same, and an error still accumulates subsequently. Adjustment of the frequency offset between the application clock of the first node and the application clock of the second node may eliminate the foregoing problem, but a process is slow. A general process is as follows: For a large count offset, the count offset between the application clock of the first node and the application clock of the second node is adjusted, and then frequency fine adjustment is continuously performed.

For example, the first node may periodically obtain the first timestamp information, and the second node may periodically obtain the second timestamp information. Correspondingly, the second node may periodically send the broadcast signaling. That is, the foregoing steps S403 to S405 may be cyclically performed. After the first node receives a plurality of pieces of broadcast signaling periodically sent by the second node, there are the following two manners:
In one manner, each time the first node receives one piece of the broadcast signaling, the first node may perform synchronization of the application clock of the first node based on the second timestamp information carried in the broadcast signaling and the first timestamp information obtained by the first node.

In another manner, after receiving a plurality of pieces of broadcast signaling, the first node may perform synchronization of the application clock of the first node based on the second timestamp information carried in each of the plurality of pieces of broadcast signaling and a plurality of pieces of first timestamp information obtained by the first node. For example, the first node currently receives a total of n pieces of broadcast signaling, and the first node may perform synchronization of the application clock of the first node based on the second timestamp information carried in m pieces of broadcast signaling before the currently received broadcast signaling and the corresponding first timestamp information, where m≤n. Further, for m pairs of the first timestamp information and the second timestamp information, different weights may be assigned to each pair of the first timestamp information and the second timestamp information pairs. For example, a weight of a latest pair of the first timestamp information and the second timestamp information is the largest, and longer receiving time of a pair of the first timestamp information and the second timestamp information indicates a smaller weight, so that synchronization of the application clock of the first node may be accurately performed based on the m pairs of the first timestamp information and the second timestamp information, and synchronization accuracy is improved.

According to the clock synchronization method provided in this embodiment of this application, on the basis that the first-type clock of the first node has an association relationship with the first-type clock of the second node, the first node may implement accurate synchronization of the second-type clock of the first node based on the first timestamp information and the second timestamp information. In this embodiment, link synchronization and application synchronization are integrated, so that application clock transfer is implemented, and application clock synchronization with high precision and low overheads is implemented.

It may be understood that, to implement functions in the foregoing embodiments, a clock synchronization apparatus includes corresponding software modules/hardware structures for performing the functions. A person skilled in the art should be easily aware that, with reference to units and method steps in examples described in embodiments disclosed in this application, this application can be implemented by hardware or a combination of hardware and computer software. Whether a function is performed by hardware or hardware driven by computer software depends on particular application scenarios and design constraints of the technical solutions.

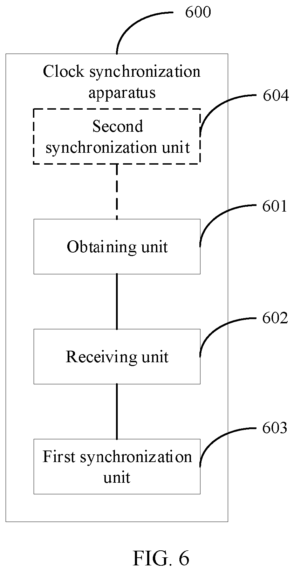

FIG. 6 is a diagram of a structure of a clock synchronization apparatus according to an embodiment of this application. The clock synchronization apparatus 600 includes an obtaining unit 601, a receiving unit 602, and a first synchronization unit 603, and may further include a second synchronization unit 604 (represented and connected by dashed lines in the figure). The details are as follows:
The obtaining unit 601 is configured to obtain first timestamp information, where the first timestamp information includes a first count value of a first-type clock of the apparatus and a second count value of a second-type clock of the apparatus, and the second count value is obtained by the second-type clock of the apparatus at a moment corresponding to the first count value. The receiving unit 602 is configured to receive broadcast signaling, where the broadcast signaling includes second timestamp information, the second timestamp information includes a third count value of a first-type clock of a second node and a fourth count value of a second-type clock of the second node, the fourth count value is obtained by the second-type clock of the second node at a moment corresponding to the third count value, and the third count value has an association relationship with the first count value. The first synchronization unit 603 is configured to perform synchronization of the second-type clock of the apparatus based on the first timestamp information and the second timestamp information.

Optionally, that the third count value has an association relationship with the first LSC count value includes: The third count value is equal to the first count value; or a difference between the third count value and the first count value is less than or equal to a first threshold.

Optionally, the second synchronization unit 604 is configured to perform, by the apparatus, synchronization of the first-type clock with the second node.

Optionally, when the apparatus determines, based on the first timestamp information and the second timestamp information, that a count offset exists between the second-type clock of the apparatus and the second-type clock of the second node, the first timestamp information and the second timestamp information are used by the apparatus to adjust the count offset of the second-type clock of the apparatus; and/or when the apparatus determines, based on the first timestamp information and the second timestamp information, that a frequency offset exists between the second-type clock of the apparatus and the second-type clock of the second node, the first timestamp information and the second timestamp information are used by the apparatus to adjust the frequency offset of the second-type clock of the apparatus.

Optionally, the broadcast signaling further includes a sequence number corresponding to the broadcast signaling.

Optionally, the second-type clock of the apparatus is independent of the first-type clock of the apparatus; or the second-type clock of the apparatus is generated based on the first-type clock of the apparatus.

Optionally, the second node is a protocol master node and a synchronization master node, and the receiving unit is configured to receive broadcast signaling from the second node.

Optionally, the second node is a synchronization master node, and the receiving unit is configured to receive broadcast signaling from a third node, where the third node is a protocol master node of the second node and the apparatus.

Optionally, the receiving unit 602 is further configured to receive a plurality of pieces of broadcast signaling; and the first synchronization unit 603 is further configured to perform synchronization of the second-type clock of the apparatus based on a plurality of pieces of first timestamp information and the second timestamp information carried in each of the plurality of pieces of broadcast signaling.

For more detailed descriptions of the foregoing units, refer to related descriptions in the method embodiment shown in FIG. 4. Details are not described herein again. The apparatus may be configured to implement functions of the first node in the foregoing method embodiment, and therefore can also implement beneficial effects of the foregoing method embodiment.

According to the clock synchronization apparatus provided in this embodiment of this application, on the basis that the first-type clock of the apparatus has an association relationship with the first-type clock of the second node, the apparatus may implement accurate synchronization of the second-type clock of the apparatus based on the first timestamp information and the second timestamp information.

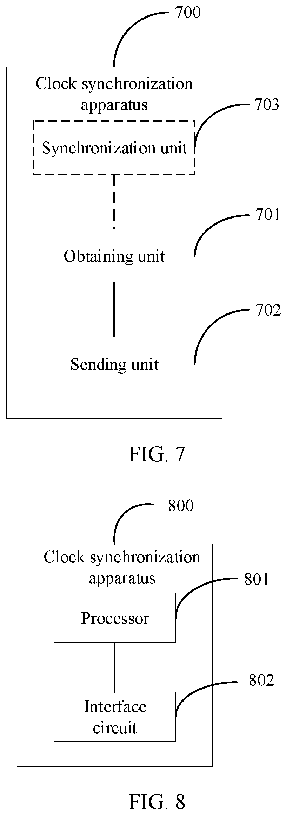

FIG. 7 is a diagram of a structure of another clock synchronization apparatus according to an embodiment of this application. The clock synchronization apparatus 700 includes an obtaining unit 701 and a sending unit 702, and may further include a synchronization unit 703 (represented and connected by dashed lines in the figure). The details are as follows:
The obtaining unit 701 is configured to obtain second timestamp information, where the second timestamp information includes a third count value of a first-type clock of the apparatus and a fourth count value of a second-type clock of the apparatus, and the fourth count value is obtained by the second-type clock of the apparatus at a moment corresponding to the third count value. The sending unit 702 is configured to send broadcast signaling, where the broadcast signaling includes the second timestamp information, to enable a first node to perform synchronization of a second-type clock of the first node based on first timestamp information and the second timestamp information after the first node receives the broadcast signaling, where the first timestamp information includes a first count value of a first-type clock of the first node and a second count value of the second-type clock of the first node, the second count value is obtained by the second-type clock of the first node at a moment corresponding to the first count value, and the third count value has an association relationship with the first count value.

Optionally, that the third count value has an association relationship with the first LSC count value includes: The third count value is equal to the first count value; or a difference between the third count value and the first count value is less than or equal to a first threshold.

Optionally, the synchronization unit 703 is configured to perform, by the apparatus, synchronization of the first-type clock to the first node.

Optionally, the broadcast signaling further includes a sequence number corresponding to the broadcast signaling.

Optionally, the second-type clock of the apparatus is independent of the first-type clock of the apparatus; or the second-type clock of the apparatus is generated based on the first-type clock of the apparatus.

Optionally, the apparatus is a synchronization master node, and the sending unit 702 is configured to forward the broadcast signaling through a third node, where the third node is a protocol master node of the apparatus and the first node.

For more detailed descriptions of the foregoing units, refer to related descriptions in the method embodiment shown in FIG. 4. Details are not described herein again. The apparatus may be configured to implement functions of the second node in the foregoing method embodiment, and therefore can also implement beneficial effects of the foregoing method embodiment.

According to the clock synchronization apparatus provided in this embodiment of this application, on the basis that the first-type clock of the first node has an association relationship with the first-type clock of the apparatus, the first node may implement accurate synchronization of the second-type clock of the first node based on the first timestamp information and the second timestamp information.

FIG. 8 is a diagram of a structure of still another clock synchronization apparatus according to an embodiment of this application. The clock synchronization apparatus 800 may include:
a processor 801 (there may be one or more processors 801 in the apparatus, and one processor is used as an example in FIG. 8) and an interface circuit 802. In some embodiments of this application, the processor 801 and the interface circuit 802 may be connected through a bus or in another manner.

When the clock synchronization apparatus is configured to implement functions of the first node in the foregoing embodiment, the processor 801 is configured to perform the following steps:
obtaining first timestamp information, where the first timestamp information includes a first count value of a first-type clock of the apparatus and a second count value of a second-type clock of the apparatus, and the second count value is obtained by the second-type clock of the apparatus at a moment corresponding to the first count value; controlling the interface circuit 802 to receive broadcast signaling, where the broadcast signaling includes second timestamp information, the second timestamp information includes a third count value of a first-type clock of a second node and a fourth count value of a second-type clock of the second node, the fourth count value is obtained by the second-type clock of the second node at a moment corresponding to the third count value, and the third count value has an association relationship with the first count value; and performing synchronization of the second-type clock of the apparatus based on the first timestamp information and the second timestamp information.

In a possible implementation, that the third count value has an association relationship with the first LSC count value includes: The third count value is equal to the first count value; or a difference between the third count value and the first count value is less than or equal to a first threshold.

In another possible implementation, before obtaining the first timestamp information, the processor 801 further performs synchronization of the first-type clock with the second node.

In still another possible implementation, when the apparatus determines, based on the first timestamp information and the second timestamp information, that a count offset exists between the second-type clock of the apparatus and the second-type clock of the second node, the first timestamp information and the second timestamp information are used by the apparatus to adjust the count offset of the second-type clock of the apparatus; and/or when the apparatus determines, based on the first timestamp information and the second timestamp information, that a frequency offset exists between the second-type clock of the apparatus and the second-type clock of the second node, the first timestamp information and the second timestamp information are used by the apparatus to adjust the frequency offset of the second-type clock of the apparatus.

In still another possible implementation, the broadcast signaling further includes a sequence number corresponding to the broadcast signaling.

In still another possible implementation, the second-type clock of the apparatus is independent of the first-type clock of the apparatus; or the second-type clock of the apparatus is generated based on the first-type clock of the apparatus.

In still another possible implementation, the second node is a protocol master node and a synchronization master node, and that the apparatus receives broadcast signaling includes: The apparatus receives broadcast signaling from the second node.

In still another possible implementation, the second node is a synchronization master node, and the controlling the interface circuit 802 to receive broadcast signaling includes: controlling the interface circuit 802 to receive broadcast signaling from a third node, where the third node is a protocol master node of the second node and the apparatus.

In still another possible implementation, the processor 801 is further configured to perform the following steps: controlling the interface circuit 802 to receive a plurality of pieces of broadcast signaling; and performing synchronization of the second-type clock of the apparatus based on a plurality of pieces of first timestamp information and the second timestamp information carried in each of the plurality of pieces of broadcast signaling.

When the clock synchronization apparatus is configured to implement functions of the second node in the foregoing embodiment, the processor 801 is configured to perform the following steps:
obtaining second timestamp information, where the second timestamp information includes a third count value of a first-type clock of the apparatus and a fourth count value of a second-type clock of the apparatus, and the fourth count value is obtained by the second-type clock of the apparatus at a moment corresponding to the third count value; and controlling the interface circuit 802 to send broadcast signaling, where the broadcast signaling includes the second timestamp information, to enable a first node to perform synchronization of a second-type clock of the first node based on first timestamp information and the second timestamp information after the first node receives the broadcast signaling, where the first timestamp information includes a first count value of a first-type clock of the first node and a second count value of the second-type clock of the first node, the second count value is obtained by the second-type clock of the first node at a moment corresponding to the first count value, and the third count value has an association relationship with the first count value.

In a possible implementation, that the third count value has an association relationship with the first LSC count value includes: The third count value is equal to the first count value; or a difference between the third count value and the first count value is less than or equal to a first threshold.

In another possible implementation, before obtaining the second timestamp information, the processor 801 further performs synchronization of the first-type clock to the first node.

In still another possible implementation, the broadcast signaling further includes a sequence number corresponding to the broadcast signaling.

In still another possible implementation, the second-type clock of the apparatus is independent of the first-type clock of the apparatus; or the second-type clock of the apparatus is generated based on the first-type clock of the apparatus.

In still another possible implementation, the apparatus is a synchronization master node, and the controlling, by the processor, the interface circuit 802 to send broadcast signaling includes: controlling the interface circuit 802 to forward the broadcast signaling through a third node, where the third node is a protocol master node of the apparatus and the first node.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

According to the clock synchronization apparatus provided in this embodiment of this application, on the basis that the first-type clock of the first node has an association relationship with the first-type clock of the second node, the first node may implement accurate synchronization of the second-type clock of the first node based on the first timestamp information and the second timestamp information.

The method steps in embodiments of this application may be implemented in a hardware manner, or may be implemented in a manner of executing software instructions by the processor. The software instructions may include a corresponding software module. The software modules may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a clock synchronization apparatus. Certainly, the processor and the storage medium may alternatively exist in an electronic device as discrete components.

All or some of the foregoing embodiments may be implemented by software, hardware, firmware, or any combination thereof. When software is used to implement embodiments, all or some of the foregoing embodiments may be implemented in a form of a computer program product. The computer program product includes one or more computer programs or instructions. When the computer programs or instructions are loaded and executed on a computer, all or some of the procedures or functions in embodiments of this application are performed. The computer may be a general-purpose computer, a dedicated computer, a computer network device, an electronic device, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc, or may be a semiconductor medium, for example, a solid-state drive.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A clock synchronization method, wherein the method comprises:
obtaining, by a first node, first timestamp information, wherein the first timestamp information comprises a first count value of a first-type clock of the first node and a second count value of a second-type clock of the first node, and the second count value is obtained by the second-type clock of the first node at a moment corresponding to the first count value;
receiving, by the first node, broadcast signaling, wherein the broadcast signaling comprises second timestamp information, the second timestamp information comprises a third count value of a first-type clock of a second node and a fourth count value of a second-type clock of the second node, the fourth count value is obtained by the second-type clock of the second node at a moment corresponding to the third count value, and the third count value has an association relationship with the first count value; and
performing, by the first node, synchronization of the second-type clock of the first node based on the first timestamp information and the second timestamp information.

2. The method according to claim 1, wherein that the third count value has an association relationship with the first count value comprises:
the third count value is equal to the first count value; or
a difference between the third count value and the first count value is less than or equal to a first threshold.

3. The method according to claim 1 or 2, wherein before the obtaining, by a first node, first timestamp information, the method further comprises:
performing, by the first node, synchronization of the first-type clock with the second node.

4. The method according to any one of claims 1 to 3, wherein
when the first node determines, based on the first timestamp information and the second timestamp information, that a count offset exists between the second-type clock of the first node and the second-type clock of the second node, the first timestamp information and the second timestamp information are used by the first node to adjust the count offset of the second-type clock of the first node; and/or
when the first node determines, based on the first timestamp information and the second timestamp information, that a frequency offset exists between the second-type clock of the first node and the second-type clock of the second node, the first timestamp information and the second timestamp information are used by the first node to adjust the frequency offset of the second-type clock of the first node.

5. The method according to any one of claims 1 to 4, wherein the broadcast signaling further comprises a sequence number corresponding to the broadcast signaling.

6. The method according to any one of claims 1 to 5, wherein the second-type clock of the first node is independent of the first-type clock of the first node; or
the second-type clock of the first node is generated based on the first-type clock of the first node.

7. The method according to any one of claims 1 to 6, wherein the second node is a protocol master node and a synchronization master node, and the receiving, by the first node, broadcast signaling comprises: receiving, by the first node, broadcast signaling from the second node.

8. The method according to any one of claims 1 to 6, wherein the second node is a synchronization master node, and the receiving, by the first node, broadcast signaling comprises: receiving, by the first node, broadcast signaling from a third node, wherein the third node is a protocol master node of the second node and the first node.

9. The method according to any one of claims 1 to 8, wherein the method further comprises:
receiving, by the first node, a plurality of pieces of broadcast signaling; and
performing, by the first node, synchronization of the second-type clock of the first node based on a plurality of pieces of first timestamp information and the second timestamp information carried in each of the plurality of pieces of broadcast signaling.

10. A clock synchronization method, wherein the method comprises:
obtaining, by a second node, second timestamp information, wherein the second timestamp information comprises a third count value of a first-type clock of the second node and a fourth count value of a second-type clock of the second node, and the fourth count value is obtained by the second-type clock of the second node at a moment corresponding to the third count value; and
sending, by the second node, broadcast signaling, wherein the broadcast signaling comprises the second timestamp information, to enable a first node to perform synchronization of a second-type clock of the first node based on first timestamp information and the second timestamp information after the first node receives the broadcast signaling, wherein the first timestamp information comprises a first count value of a first-type clock of the first node and a second count value of the second-type clock of the first node, the second count value is obtained by the second-type clock of the first node at a moment corresponding to the first count value, and the third count value has an association relationship with the first count value.

11. The method according to claim 10, wherein that the third count value has an association relationship with the first count value comprises:
the third count value is equal to the first count value; or
a difference between the third count value and the first count value is less than or equal to a first threshold.

12. The method according to claim 10 or 11, wherein before the obtaining, by a second node, second timestamp information, the method further comprises:
performing, by the second node, synchronization of the first-type clock to the first node.

13. The method according to any one of claims 10 to 12, wherein the broadcast signaling further comprises a sequence number corresponding to the broadcast signaling.

14. The method according to any one of claims 10 to 13, wherein the second-type clock of the second node is independent of the first-type clock of the second node; or
the second-type clock of the second node is generated based on the first-type clock of the second node.

15. The method according to any one of claims 10 to 14, wherein the second node is a synchronization master node, and the sending, by the second node, broadcast signaling comprises: forwarding, by the second node, the broadcast signaling through a third node, wherein the third node is a protocol master node of the second node and the first node.

16. A clock synchronization apparatus, comprising a module configured to perform the method according to any one of claims 1 to 9, or comprising a module configured to perform the method according to any one of claims 10 to 15.

17. A clock synchronization apparatus, comprising a processor and an interface circuit, wherein the interface circuit is configured to: receive a signal from an apparatus other than the apparatus and transmit the signal to the processor, or send a signal from the processor to an apparatus other than the apparatus, and the processor is configured to implement the method according to any one of claims 1 to 9 or the method according to any one of claims 10 to 15 by using a logic circuit or executing code instructions.

18. A chip, wherein the chip is configured to perform the method according to any one of claims 1 to 9, or is configured to perform the method according to any one of claims 10 to 15.

19. A chip module, comprising a transceiver component and a chip, wherein the chip is configured to perform the method according to any one of claims 1 to 9, or is configured to perform the method according to any one of claims 10 to 15.

20. A clock synchronization system, comprising the clock synchronization apparatus according to claim 16.

21. A computer-readable storage medium, wherein the storage medium stores a computer program or instructions, and when the computer program or instructions are executed by a communication apparatus, the method according to any one of claims 1 to 9 or the method according to any one of claims 10 to 15 is implemented.
